# EUROPEAN PATENT APPLICATION

(11) **EP 4 628 230 A1**
(43) Date of publication of application: **08.10.2025**
(21) Application number: 23897575.9
(22) Date of filing: 20.11.2023
(51) Int. Cl.: B22C 1/22, C08G 8/20, C08L 61/12

(54) **ORGANIC BINDER FOR MOLDS, AND MOLDING SAND COMPOSITION AND MOLD PRODUCED USING SAME**

(30) Priority: 29.11.2022 JP 2022189750
(71) Applicant: Asahi Yukizai Corporation, Nobeoka-shi, Miyazaki 882-8688 (JP)
(72) Inventor: MORI, Keiichi, Niwa-gun, Aichi 480-0105 (JP); MAEDA, Hironobu, Niwa-gun, Aichi 480-0105 (JP)
(74) Representative: Mewburn Ellis LLP
(86) International application number: PCT/JP2023/041583
(87) International publication number: WO 2024/116927

(57) **Abstract**

Provided is an organic binder for molds, which has an excellent curing speed during molding and that yields a mold exhibiting excellent strength. The organic binder for molds is prepared using: a lignin-modified phenolic resin that serves as a resin binding component; and triethylenediamine. The lignin-modified phenolic resin is preferably a novolac-type phenolic resin modified with at least one component selected from kraft lignin, glycol lignin and lignin acetate.

## Description

### TECHNICAL FIELD

The present invention relates to an organic binder for casting molds, a molding sand composition obtained by using the same, and a mold, and more particularly to an organic binder that can ultimately produce a mold having excellent properties in a short period of time, a molding sand composition obtained by using the same, and a mold produced by molding using such a molding sand composition.

### BACKGROUND ART

Conventionally, in sand mold casting typified by shell mold casting, resin-coated sand (hereinafter referred to as "RCS") obtained by kneading refractory particles (molding sand) and a phenolic resin as a binder, and further kneading a hardener such as hexamethylenetetramine as required, is used to heat and mold the resulting resin-coated sand into a desired shape. And various types of RCS used in the manufacture of sand molds such as shell molds and binders used in the manufacture of such RCS have been proposed and used up to now.

On the other hand, in recent years, from an environmental perspective, the use of biomass-derived raw materials dealing with carbon-neutral in the production of RCS has been examined in various ways. For example, Patent Document 1 (WO 2014/136762 A1) proposes a coated sand containing a biomass-derived resin and aggregate, the biomass-derived resin being a resin containing lignin, and the lignin being obtained by removing cellulose and hemicellulose components from plants by a method using water. In addition, the applicant of the present application, as one of the co-applicants, has proposed in Patent Document 2 (JP-A-2018-118298) a resin coated sand containing aggregate and resin, characterized in that the resin contains a reaction product of lignin, phenols, and aldehydes.

### PRIOR ART DOCUMENTS

### PATENT DOCUMENTS

Patent Document 1: WO 2014/136762 A1
Patent Document 2: JP-A-2018-118298

### SUMMARY OF THE INVENTION

### TECHNICAL PROBLEMS

Under these circumstances, the present inventors have conducted extensive research into resin coated sand (RCS) and the resin binder used therein, and have found that RCS using a phenolic resin modified with lignin (lignin-modified phenolic resin) as the resin binder has an inherent problem of a slower curing speed during mold producing compared to RCS using an unmodified phenolic resin. As a result of further intensive research, it was discovered that a molding sand composition (resin coated sand) obtained by using a material, containing lignin-modified phenolic resin and triethylenediamine, as an organic binder for casting molds, has a fast curing speed during mold producing and can produce molds that have strength comparable to that of conventional RCS using unmodified phenolic resin, thereby completing the present invention.

That is, the present invention has been made in the light of the above circumstances, and the problem to be solved by the present invention is to provide an organic binder for casting molds which has an excellent curing speed during mold producing and which allows the resulting mold to exhibit excellent strength. Another object of the present invention is to provide a molding sand composition obtained by using such an organic binder for casting molds, and further to provide a casting mold produced by using such a molding sand composition.

### SOLUTION TO PROBLEMS

In order to solve the above-mentioned problems, the present invention can be preferably embodied in various modes which will be described below. The following modes may be combined in any desired manner. And, it is to be understood that the modes and technical features of the present invention are not limited to those described below, and can be recognized based on the inventive concept disclosed in the specification taken as a whole.
(1) An organic binder for casting molds, comprising triethylenediamine, together with a lignin-modified phenolic resin as a resin binder component.
(2) The organic binder for casting molds according to the above-mentioned mode (1), wherein the lignin-modified phenolic resin is a lignin-modified novolak type phenolic resin.
(3) The organic binder for casting molds according to the above-mentioned mode (1) or (2), wherein the lignin-modified phenolic resin is a phenolic resin modified with at least one of kraft lignin, glycol lignin and lignin acetate.
(4) The organic binder for casting molds according to the above-mentioned mode (1) or (2), wherein the modification rate of the lignin-modified phenolic resin is 5-50%.
(5) The organic binder for casting molds according to the above-mentioned mode (1) or (2), further comprising an aromatic carboxylic acid.
(6) The organic binder for casting molds according to the above-mentioned mode (1) or (2), wherein the triethylenediamine is contained in an amount of 0.5-20 parts by mass per 100 parts by mass of the resin binder component.
(7) The organic binder for casting molds according to the above-mentioned mode (5), wherein the aromatic carboxylic acid is contained in an amount of 0.5-5 parts by mass per 100 parts by mass of the resin binder component.
(8) The organic binder for casting molds according to the above-mentioned mode (5), wherein the aromatic carboxylic acid is one or more selected from the group consisting of benzoic acid, salicylic acid, anthranilic acid, and p-aminobenzoic acid.
(9) A molding sand composition comprising the organic binder for casting molds according to the above-mentioned mode (1) or (2) and molding sand.
(10) A mold obtained by molding and hardening the molding sand composition according to the above-mentioned mode (9).

### ADVANTAGEOUS EFFECTS OF THE INVENTION

As described above, the organic binder for casting molds according to the present invention is configured to contain triethylenediamine together with the lignin-modified phenolic resin (phenolic resin modified with lignin) as the resin binder component. Therefore, when the molding sand composition using such an organic binder for casting molds hardens, triethylenediamine effectively functions as a curing agent and curing accelerator, so that such a molding sand composition has an excellent curing speed during producing a mold and the obtained mold exhibits excellent strength.

### MODE FOR CARRYING OUT THE INVENTION

The organic binder for casting molds according to the present invention is constituted by using a phenolic resin modified with lignin (lignin-modified phenolic resin) as a resin binder component.

Here, lignin is one of the main components of lignified plant bodies, and is a phenolic polymer compound formed by the oxidative polymerization of lignin monomers called monolignols by enzymes. Monolignols (lignin monomers) are p-hydroxycinnamic alcohols whose basic structure is a phenylpropane unit (C₆-C₃ unit), and there are three types: coniphenyl alcohol, sinapyl alcohol, and p-coumaryl alcohol. The aromatic nucleus units of lignin derived from each monolignol are called guaiacyl nucleus (G nucleus), syringyl nucleus (S nucleus) and p-hydroxyphenyl nucleus (H nucleus or P nucleus). However, the detailed structure of lignin is still unknown. Natural lignin is broadly classified into coniferous lignin, broadleaf lignin, and grass plant lignin (herbaceous lignin). Generally, coniferous lignin has a G nucleus, broad leaf lignin has a G nucleus and an S nucleus, and grass plant lignin (herbaceous lignin) has a G nucleus, an S nucleus and an H nucleus. Such natural lignin forms a tightly composite material with polysaccharides (cellulose, hemicellulose) in the cell walls of plants, making it extremely difficult to isolate natural lignin without modifying its chemical structure. For this reason, lignin isolated by various methods is called isolated lignin, although to different degrees, to be distinguished from natural lignin.

In the present invention, when producing a lignin-modified phenolic resin, the above-mentioned isolated lignin can be advantageously used. Examples of such isolated lignin include a) kraft lignin obtained from the waste liquid of a chemical pulping process called the kraft process, b) lignosulfonates obtained from the waste liquid of a chemical pulping process called the sulfite process, c) soda lignin (soda-anthraquinone lignin) derived from the soda process (soda-anthraquinone process) which is mainly applied to the chemical pulping of herbaceous plants, d) organosolv lignin (acetic acid lignin, ethanol lignin, etc.) obtained by the organosolv process, and, e) explosion lignin obtained by explosion treatment (high-pressure water steam treatment). In producing (preparing) the organic binder for casting molds according to the present invention, phenolic resin modified with kraft lignin, phenolic resin modified with glycol lignin (also called modified lignin) isolated from Japanese cedar using polyethylene glycol, and phenolic resin modified with lignin acetate (acetic acid lignin) are advantageously used. In addition, in producing a lignin-modified phenolic resin, it is possible to use not only one type of the above-mentioned isolated lignin, but also two or more types of lignin.

The lignin-modified phenolic resin used as the resin binder component in the organic binder for casting molds according to the present invention is a condensation product in a solid or liquid state (for example, a varnish or emulsion state) obtained by reacting the above-mentioned lignin, phenols, and aldehydes in the presence of an acidic or basic catalyst, and is a resin that exhibits thermosetting properties when heated in the presence or absence of a specific curing agent or curing catalyst. Depending on the catalyst used, a lignin-modified novolak type phenolic resin or a lignin-modified resol type phenolic resin is obtained.

Here, the phenols used in producing the lignin-modified phenolic resin refer to phenol and phenol derivatives, and examples thereof include, in addition to phenol, alkylphenols such as cresol, xylenol, p-tert-butylphenol, and nonylphenol; polyhydric phenols such as resorcinol, bisphenol F, and bisphenol A; naphthols; and mixtures thereof. In the present invention, one of them may be used alone or two or more of them may be used in combination.

In addition, examples of aldehydes used in producing the lignin-modified phenolic resin include formalin, which is an aqueous solution of formaldehyde, as well as paraformaldehyde, trioxane, acetaldehyde, paraaldehyde, propionaldehyde, and the like. Furthermore, other known aldehyde compounds can also be used as appropriate. These aldehydes can be used alone or in combination of two or more kinds.

The lignin-modified novolak-type phenolic resin used in the present invention is formed by a condensation reaction of lignin, phenols, and aldehydes in the presence of an acid catalyst, for example, an inorganic acid such as hydrochloric acid, sulfuric acid, or phosphoric acid, an organic acid such as oxalic acid, paratoluenesulfonic acid, benzenesulfonic acid, or xylenesulfonic acid, or an acidic substance such as zinc oxide, zinc chloride, magnesium oxide, or zinc acetate, as is well known. In this case, the blending molar ratio (F/P) of the aldehydes (F) and the phenols (P) can be appropriately selected depending on the type of reaction catalyst used, etc., but is preferably selected within the range of 0.30-0.85. In addition to the lignin-modified novolak type phenolic resins which are co-condensed between lignin and phenols, modified-type lignin-modified novolak type phenolic resins obtained by modifying such co-condensed lignin-modified novolak type phenolic resins with a modifier (modifier), and mixtures thereof, can also be used in the present invention.

On the other hand, the lignin-modified resol type phenolic resin is formed by a condensation reaction of lignin, phenols, and aldehydes in the presence of a known basic catalyst in the same manner as in the past. As the basic catalyst, hydroxides of alkali metals or alkaline earth metals such as sodium hydroxide or calcium hydroxide, or oxides of alkaline earth metals can be used. In addition, amines such as dimethylamine, triethylamine, butylamine, dimethylbenzylamine, and naphthalenediamine, ammonia, hexamethylenetetramine, naphthenates of other divalent metals, hydroxides of divalent metals, and the like can also be used. The molar ratio (F/P) of the aldehydes and the phenols in such a condensation reaction is appropriately selected depending on the type of reaction catalyst used, etc., but is generally selected within the range of 1.1-4.0. In addition to the lignin-modified resol type phenolic resins which are co-condensed lignin and phenols, modified-type lignin-modified resol type phenolic resins obtained by modifying such co-condensed lignin-modified resol type phenolic resins with a modifier (modifier), and mixtures thereof, can also be used in the present invention.

In the present invention, either the lignin-modified novolak type phenolic resin or the lignin-modified resol type phenolic resin described above can be used, but the lignin-modified novolak type phenolic resin is preferably used.

If the modification rate (the ratio of lignin to the total amount of lignin and phenols) in the above-mentioned lignin-modified phenolic resin is too low, the effects of the present invention may not be obtained to an advantageous extent. On the other hand, if the modification rate is too high, the curing speed during mold production and the strength of the obtained mold may decrease. Therefore, the modification rate of the lignin-modified phenolic resin used in the present invention is preferably 5-50%, and more preferably 10-40%.However, even if the lignin-modified phenolic resin has a high degree of modification, the excellent effects of the present invention can be advantageously enjoyed by using it in combination with an unmodified phenolic resin.

The organic binder for casting molds according to the present invention contains the above-mentioned lignin-modified phenolic resin as a resin binder component, as an essential component. However, in addition to the lignin-modified phenolic resin, other resins such as unmodified novolak type phenolic resins and resol type phenolic resins can also be used in combination as long as they do not impede the object of the present invention.

The organic binder for casting molds according to the present invention is constituted by a lignin-modified phenolic resin and triethylenediamine as essential components. According to the findings of the present inventors, triethylenediamine acts advantageously as a curing agent and curing accelerator for lignin-modified phenolic resins, thereby improving the curing speed during mold producing and imparting excellent strength to the obtained mold.

If the amount of triethylenediamine used is too small, the effects of the present invention may not be achieved, whereas if the amount used is too large, the obtained mold may not exhibit sufficient strength. For this reason, in the present invention, triethylenediamine is preferably used in an amount of 0.5-20 parts by mass per 100 parts by mass of the total amount of the resin components.

In the present invention, in order to more effectively exert the effect of adding (using) triethylenediamine, it is preferable to use an aromatic carboxylic acid together with triethylenediamine, and the amount used is preferably 0.5-5 parts by mass per 100 parts by mass of the total amount of the resin components. If the amount of the aromatic carboxylic acid used is too small, the effect of the aromatic carboxylic acid may not be fully obtained. On the other hand, if the amount used is too large, the fusion point of RCS may be lowered, which may easily induce blocking of the RCS. Examples of aromatic carboxylic acids that can be used in the present invention include benzoic acid, salicylic acid, anthranilic acid, p-aminobenzoic acid, phthalic acid, isophthalic acid, terephthalic acid, acetylsalicylic acid, o-toluic acid, m-toluic acid, p-toluic acid, o-anisic acid, m-anisic acid, p-anisic acid, o-cresotinic acid, m-cresotinic acid, p-cresotinic acid, gallic acid, trimellitic acid, hydrocinnamic acid, cinnamic acid, and cresotinic acid. Among them, benzoic acid, salicylic acid, anthranilic acid and p-aminobenzoic acid are preferably used, and benzoic acid is most preferably used.

The organic binder for casting molds according to the present invention having the above-mentioned composition is mixed with known molding sand (foundry sand) to coat the surface of the sand, thereby forming resin coated sand (RCS), which is a molding sand composition for producing casting molds such as shell molds. The amount of organic binder used to obtain such RCS is not generally limited since it is determined in consideration of the type of resin binder component contained therein, the required strength of the mold, and the like. Generally, however, the amount is within the range of about 0.2-10 parts by mass, preferably 0.5-8 parts by mass, and more preferably 0.5-5 parts by mass, per 100 parts by mass of the molding sand (foundry sand).

The molding sand (foundry sand) to be coated by the organic binder for casting mold according to the present invention may be appropriately selected from conventionally known foundry sands, and the type of the foundry sand is not particularly limited in the present invention. Since such foundry sands serve as the base material for the casting mold, any of the known inorganic particles that have been conventionally used in shell mold casting can be used as long as they are inorganic refractory particles having fire resistance sufficient to withstand casting and a particle size suitable for mold producing (molding). Examples of such refractory particles include, in addition to commonly used silica sand, special sands such as olivine sand, zircon sand, chromite sand, and alumina sand; slag-based particles such as ferrochrome-based slag, ferronickel-based slag, and converter slag; mullite-based artificial particles such as NAIGAI CERA BEADS (product name: manufactured by ITOCHU CERATECH CORPORATION); and recycled particles obtained by recovering and regenerating these after casting. These may be used alone or in combination of two or more kinds.

In producing the RCS, which is the molding sand composition according to the present invention, it is possible to use a lubricant which contributes to improving the fluidity of the RCS. Among such lubricants, for example, waxes such as paraffin wax, synthetic polyethylene wax, and montanic acid wax; fatty acid amides such as stearic acid amide, oleic acid amide, and erucic acid amide; and alkylene fatty acid amides such as methylene bis-stearic acid amide and ethylene bis-stearic acid amide, can be used (blended) both during the production of the lignin-modified phenolic resin and during the production of RCS. In addition, stearic acid, stearyl alcohol, lead stearate, zinc stearate, calcium stearate, magnesium stearate, stearate monoglyceride, stearyl stearate, hardened oils, and the like, which function as lubricants, can be used (blended) during the production of RCS. On the other hand, it is also effective to use a coupling agent that strengthens the bond between the fire-resistant aggregate (molding sand) and the lignin-modified phenolic resin. For example, a coupling agent such as a silane coupling agent, a zircon coupling agent, or a titanium coupling agent can be used (blended) during both the production of the lignin-modified phenolic resin and the production of RCS. Furthermore, as a release agent, it is also possible to use (blend) paraffin, wax, light oil, machine oil, spindle oil, insulating oil, waste oil, vegetable oil, fatty acid ester, organic acid, graphite particles, mica, vermiculite, fluorine-based release agents, silicone-based release agents, and the like.

In addition, when the objective RCS is produced using the organic binder for casting molds according to the present invention, the production method is not particularly limited, and any of the conventionally known methods such as a dry hot coating method, a semi-hot coating method, a cold coating method, a powder solvent method, etc., may be adopted. In the present invention, it is particularly recommended to employ the so-called dry hot coat method, in which preheated molding sand (foundry sand) is mixed with the resin binder that constitutes the organic binder in a mixer such as a Whirl Mixer or a Speed Mixer, and then an aqueous solution of a hardening accelerator is added as required, and the lumps of the foundry sand are broken down into granules by cooling with air, and calcium stearate (lubricant) is added. The timing for mixing the organic binder according to the present invention with the molding sand (foundry sand) can be appropriately selected.

Furthermore, when the RCS obtained as described above is used to produce a specific mold such as a shell mold, the mold is produced under heat in order to heat-set the RCS. There is no particular limitation on the method for such heat producing of the mold, and any of the conventionally known methods may be advantageously used. For example, the RCS as described above can be filled into a metal mold heated to 150°C-300°C, having a desired shape and space to provide the desired casting mold, by gravity dropping, blowing, or other methods, and then hardened. The hardened mold can then be removed from the metal mold to obtain a casting mold. The mold thus obtained is advantageously endowed with the excellent characteristics described above.

### EXAMPLES

To clarify the present invention more specifically, some examples of the invention will be described below, but it goes without saying that the present invention is not limited to the details of such examples. Further, it is to be understood that in addition to the illustrated examples and the foregoing description, the present invention may be embodied with various other changes, modifications and improvements, which may occur to those skilled in the art without departing from the spirit and scope of the invention.

The characteristics of the RCS produced below were measured according to the following test methods. Regarding the measured values of each RCS in each test, the measured values of RCS in Comparative Example 1 were used as the standard values in order to compare with the measured values of RCS obtained using the organic binder for casting molds in Comparative Example 1 (an organic binder for casting molds consisting only of unmodified novolak type phenolic resin). More specifically, the bending strength and fusion point of RCS were calculated by setting the measured value of the RCS of Comparative Example 1 to 100, and the amount of bending was calculated by setting the measured value of the RCS of Comparative Example 1 to 300. The results are shown in Tables 1 and 2 below as evaluation values.

### Example 1

In a reaction vessel equipped with a thermometer, a stirrer and a condenser, 750 parts by mass of phenol, 385 parts by mass of kraft lignin (manufactured by UPM-Kymmene Oyj, purity: 65%), 244 parts by mass of 47% formalin, and 3.8 parts by mass of oxalic acid were fed. The molar ratio of phenol to formalin (F/P) is 0.48. Next, the temperature of the reaction vessel was gradually raised until it reached the reflux temperature, and then the reaction was carried out at reflux for 180 minutes. The reaction liquid was then further heated until the temperature reached 190°C and concentrated under reduced pressure to obtain a lignin-modified novolak type phenolic resin (Resin a) with a modification rate of 25%. The organic binder for casting molds was obtained by adding triethylenediamine to Resin a at a ratio of 5 parts by mass to 100 parts by mass of Resin a, which was cooled slowly to about 170°C immediately after decompression and concentration, and mixing (Example 1).

### Examples 2-5

The organic binders for casting molds were obtained under the same conditions and by the same method as in Example 1, except that the blending ratio of triethylenediamine to 100 parts by mass of Resin a was changed to 0.5 parts by mass, 2 parts by mass, 10 parts by mass, and 20 parts by mass as shown in Table 1 below (Examples 2-5).

### Examples 6-8

As shown in Table 1 below, the organic binders for casting molds were obtained under the same conditions and by the same method as in Example 1, except that benzoic acid was added and mixed with triethylenediamine at a ratio of 2, 0.5 or 5 parts by mass to 100 parts by mass of Resin a (Examples 6-8).

### Examples 9-11

As shown in Table 1 below, the organic binders for casting molds were obtained under the same conditions and by the same method as in Example 1, except that either salicylic acid, anthranilic acid or p-aminobenzoic acid was added together with triethylenediamine in a ratio of 2 parts by mass per 100 parts by mass of Resin a and mixed (Examples 9-11).

### Example 12

In a reaction vessel equipped with a thermometer, a stirrer and a condenser, 950 parts by mass of phenol, 77 parts by mass of kraft lignin, 387 parts by mass of 47% formalin, and 4.8 parts by mass of oxalic acid were fed. The molar ratio of phenol to formalin (F/Ps) is 0.60. Next, the temperature of the reaction vessel was gradually raised until it reached the reflux temperature, and then the reaction was carried out at reflux for 180 minutes. The reaction liquid was then further heated until the temperature reached 190°C and concentrated under reduced pressure to obtain a lignin-modified novolak type phenolic resin (Resin b) with a modification rate of 5%. The organic binder for casting molds was obtained by adding triethylenediamine to Resin b at a ratio of 5 parts by mass to 100 parts by mass of Resin b, which was cooled slowly to about 170°C immediately after decompression and concentration, and mixing (Example 12).

### Example 13

The lignin-modified novolak type phenolic resin (Resin c) having a modification rate of 50% was obtained under the same conditions and by the same method as in Example 12, except that 500 parts by mass of phenol, 769 parts by mass of kraft lignin, and 136 parts by mass of 47% formalin were used, and then an organic binder for casting molds was obtained (Example 13).

### Example 14

The lignin-modified novolak type phenolic resin (Resin d) having a modification rate of 60% was obtained under the same conditions and by the same method as in Example 12, except that 400 parts by mass of phenol, 923 parts by mass of kraft lignin, and 95 parts by mass of 47% formalin were used, and then the organic binder for casting molds was obtained (Example 14).

### Example 15

The same conditions and methods as in Example 1 were followed, except that 253 parts by mass of glycol lignin (manufactured by Lignomateria Co., Ltd., purity: 99%) was used instead of the kraft lignin, to obtain the lignin-modified novolak type phenolic resin (Resin e) with a modification rate of 25%, and then the organic binder for casting molds was obtained (Example 15).

### Example 16

The same conditions and methods as in Example 1 were followed, except that 269 parts by mass of lignin acetate (purity: 93%) was used instead of the kraft lignin, to obtain the lignin-modified novolak type phenolic resin (Resin f) with a modification rate of 25%, and then the organic binder for casting molds was obtained (Example 16).

### Example 17

In a reaction vessel equipped with a thermometer, a stirrer and a condenser, 1000 parts by mass of phenol, 441 parts by mass of 47% formalin, and 5 parts by mass of oxalic acid were fed. The molar ratio of phenol to formalin (F/P) is 0.65. Next, the temperature of the reaction vessel was gradually raised until it reached the reflux temperature, and then the reaction was carried out at reflux for 180 minutes. The reaction liquid was then further heated until the temperature reached 190°C and concentrated under reduced pressure to obtain a novolak type phenolic resin (Resin g).

To a mixture of 50 parts by mass of Resin g that had been gradually cooled to about 170°C immediately after vacuum concentration and 50 parts by mass of Resin c that had been gradually cooled to about 170°C immediately after vacuum concentration, triethylenediamine was added in a ratio of 5 parts by mass per 100 parts by mass of the mixture, and mixed to obtain an organic binder for casting molds (Example 17).

### Comparative Example 1

Only Resin a (the lignin-modified novolak type phenolic resin with a modification rate of 25%) was used to prepare a binder for casting molds (Comparative Example 1).

### Comparative Example 2

Only kraft lignin was used to prepare a binder for casting molds (Comparative Example 2).

### Manufacturing of RCS using organic binder for casting mold

7,000 parts of Flattery Silica Sand heated to 145°C was fed into a whirl mixer, and 105 parts of the organic binder for casting molds obtained above was added, and kneading was performed until the sand grains disintegrated. After cooling with air, 7 parts of calcium stearate was further added to obtain RCS for shell molds using each of the organic binders. An attempt was made to produce RCS using the organic binder for casting molds consisting only of kraft lignin in Comparative Example 2, but kneading was not possible and RCS could not be obtained. For this reason, in Table 2 below, the evaluation column for Comparative Example 2 states "molding not possible".

### Measurement of bending strength

Using each of the RCS obtained as described above, a JIS test piece (10 mm×10 mm×60 mm, firing conditions: 250°C×60 seconds) was prepared in accordance with JIS-K-6910. The bending strength (kgf/cm²) of the obtained JIS test piece was measured in accordance with JACT test method: SM-1. The higher values shown in Tables 1, 2 below indicate that the casting molds have higher strength.

### Measurement of amount of bending (300gf)

In accordance with "deflection test method of JACT test method: SM-3", a load of 300 gf was applied to the center of each test piece (180 mm x 40 mm x 5 mm, firing conditions: 250°C x 40 seconds) obtained using each of the RCS, and after leaving it for 3 minutes, the amount of distortion (mm) at the center of the test piece was read with a dial gauge, and the read value was taken as the amount of bending (300 gf). The amount of bending (deflection) is an indicator of the handling properties and hardening speed of the mold immediately after forming a mold, and the smaller the value shown in Tables 1, 2 below, the faster the hardening speed of the mold and the better the handling properties.

### Measurement of fusion point of RCS

The fusion point of each RCS was measured in accordance with "JACT test method: C-1 (fusion point test method)". The larger the values shown in Tables 1, 2 below, the better the blocking resistance of the RCS.

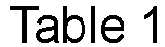

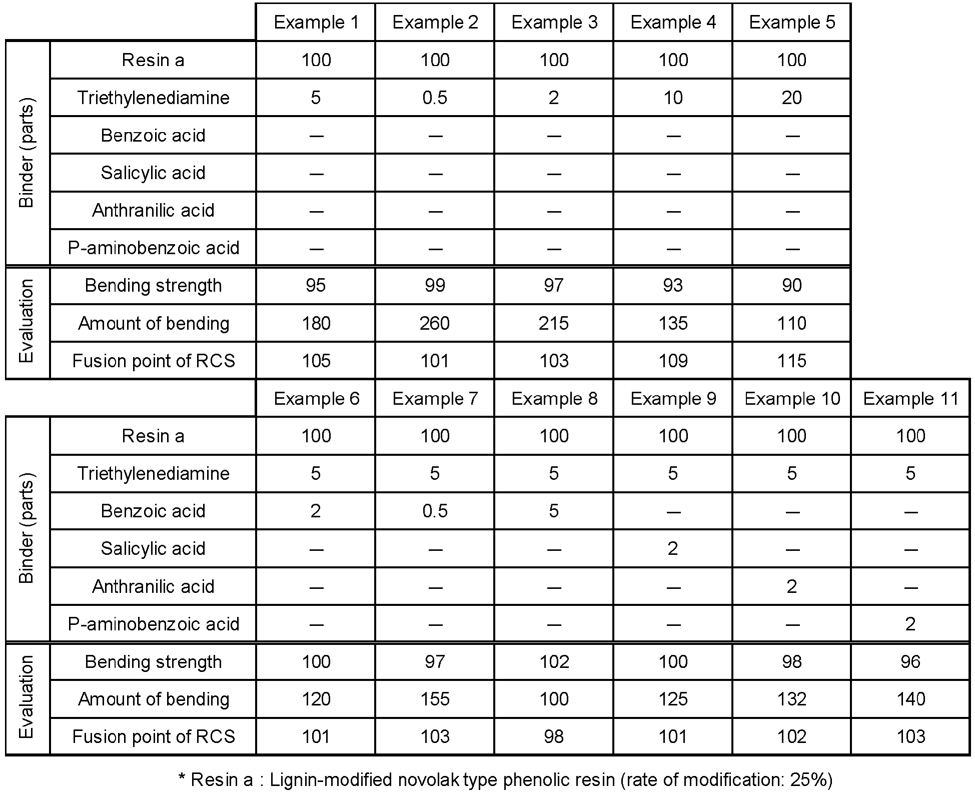

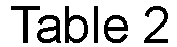

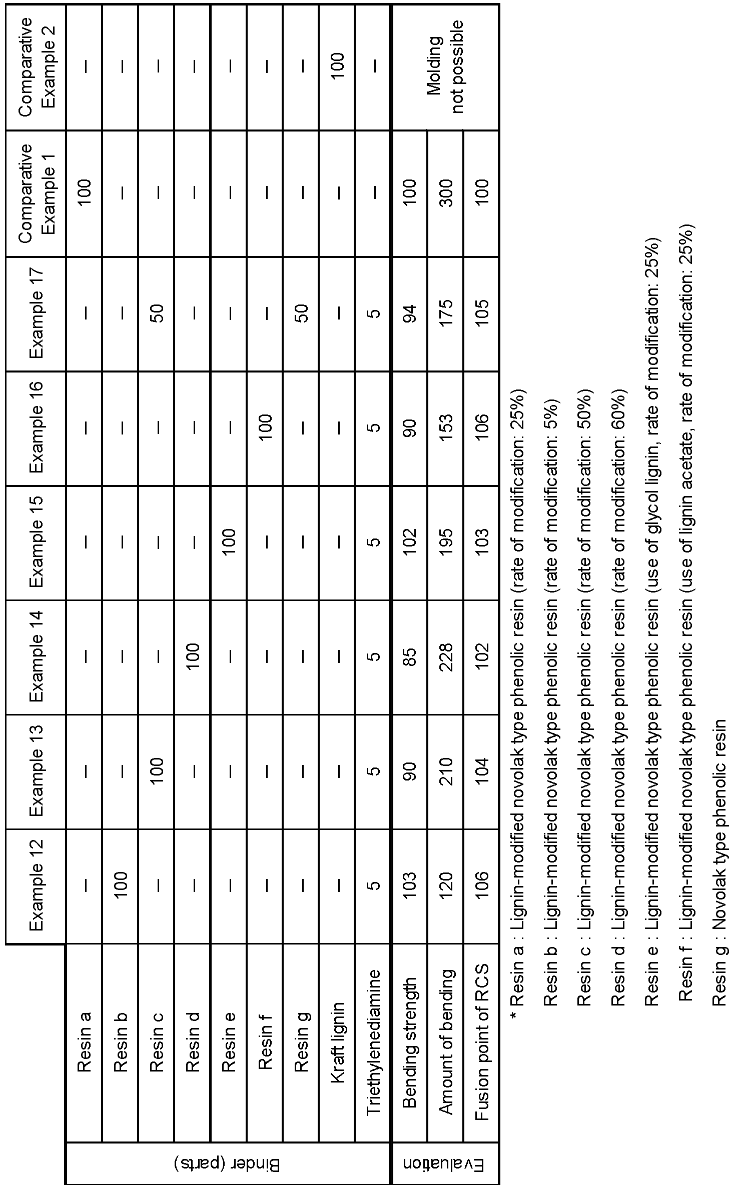

As is clear from the results of Tables 1 and 2, the RCS obtained by using the organic binder for casting molds according to the present invention has a smaller amount of bending than the mold made of the RCS using the organic binder for casting molds containing only the lignin-modified novolak type phenolic resin (Resin a) (Comparative Example 1), and therefore the mold cures faster and has the same or better strength.

## Claims

1. An organic binder for casting molds, comprising triethylenediamine, together with a lignin-modified phenolic resin as a resin binder component.

2. The organic binder for casting molds according to claim 1, wherein the lignin-modified phenolic resin is a lignin-modified novolak type phenolic resin.

3. The organic binder for casting molds according to claim 1 or 2, wherein the lignin-modified phenolic resin is a phenolic resin modified with at least one of kraft lignin, glycol lignin and lignin acetate.

4. The organic binder for casting molds according to claim 1 or 2, wherein the modification rate of the lignin-modified phenolic resin is 5-50%.

5. The organic binder for casting molds according to claim 1 or 2, further comprising an aromatic carboxylic acid.

6. The organic binder for casting molds according to claim 1 or 2, wherein the triethylenediamine is contained in an amount of 0.5-20 parts by mass per 100 parts by mass of the resin binder component.

7. The organic binder for casting molds according to claim 5, wherein the aromatic carboxylic acid is contained in an amount of 0.5-5 parts by mass per 100 parts by mass of the resin binder component.

8. The organic binder for casting molds according to claim 5, wherein the aromatic carboxylic acid is one or more selected from the group consisting of benzoic acid, salicylic acid, anthranilic acid, and p-aminobenzoic acid.

9. A molding sand composition comprising the organic binder for casting molds according to claim 1 or 2 and molding sand.

10. A mold obtained by molding and hardening the molding sand composition according to claim 9.
